(19) Europäisches Patentamt
European Patent Office
Office européen des brevets

(11) **EP 2 660 781 A1**

(12) **EUROPEAN PATENT APPLICATION**

(43) Date of publication:
**06.11.2013 Bulletin 2013/45**

(51) Int Cl.:
**G06T 17/00** $^{(2006.01)}$

(21) Application number: **12305492.6**

(22) Date of filing: **03.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Tytgat, Donny**
**9000 Gent (BE)**

• **Lievens, Sammy**
**2930 Brasschaat (BE)**
• **Aerts, Maarten**
**9120 Beveren-Waas (BE)**

(74) Representative: **ALU Antw Patent Attorneys**
**Intellectual Property and Standards**
**Copernicuslaan 50**
**2018 Antwerp (BE)**

(54) **Three-dimensional model generation**

(57) A method for generating a 3D model from at least one image data input (P1,R1(cam1); ...; Pn, Rn(camn)) comprising 2D+z+reliability information comprises the steps of building a 3D surface from said at least one image data input, followed by a meshing operation in 3D on said 3D surface to thereby generate said 3D model.

Fig. 1

**Description**

The present invention relates to a method for generating a three-dimensional, which, in the remainder of this document will be abbreviated by 3D, model, based on one or more two-dimensional, which, in the remainder of this document will be abbreviated by 2D, image input data together with their associated depth or disparity information, both of which terms will in the remainder of this document be denoted and abbreviated by "z" information.

They are many methods described in the literature which focus on 3D model generation from and based on dense, high quality point clouds. Such point clouds can for instance be created with a 3D laser scanner. However, these methods are not intended for real-time execution; as these calculations may take minutes for processing one single frame. Furthermore these methods are not applicable for noisy input data.

Another popular method for generating a 3D model may use 2D+Z input data obtained from a stereo camera. When three neighboring 2D pixels have depth values of which the differences lie below a certain threshold, a triangle will be created from these 3 pixels, and this operation is performed for all pixels of the image. While this is an easy and straightforward method, the quality is of the resulting model may be bad in the presence of noisy input data. It is furthermore not straightforward to combine multiple of such 2D+Z sources into one consistent model. One needs to do mesh merging for overlapping regions, which is not an easy operation.

Another more complex existing method is called "Poisson surface reconstruction". This method is suited to cope with noisy data but it is again very slow as it may take several minutes of processing time per single video frame.

It is thus an object of embodiments of the present invention to provide a method of the above known kind, but which is accurate even in the presence of noisy data, and at the same time fast enough for real-time 3D model generation. This is of particular interest when a 3D model is to be adapted to match as close as possible real-time video input data, which generally have a frame rate of e.g. 30 frames per second.

According to embodiments of the invention this object is achieved by the provision of a method for generating a 3D model from at least one image data input comprising 2D+z+reliability information, said method comprising the steps of building a 3D surface from said at least one image data input, followed by a meshing operation in 3D on said 3D surface to thereby generate said 3D model.

In contrast to the existing methods, embodiments of our method explicitly use the reliability data provided together with the 2D+z image input data. This allows building a reliable surface function from which a 3D model can be obtained by traditional meshing operations, even in the presence of noisy image input data.

In an embodiment said 3D surface is generated from the calculation of a distance function, applied at corner points of an octree structure, such that points at said octree structure with a predetermined value of said distance function, will form said 3D surface.

This presents a simple, yet accurate method allowing real-time processing.

In yet another embodiment said octree structure is further segmented based on the value of said distance function.

This allows further refining the 3D surface, improving the accuracy.

In another variant said distance function is calculated from the projection of a point of said octree to the projection plane of the equivalent camera generating said 2D+z data, from the distance of said point of said octree to the camera center of said equivalent camera, and from the corresponding z-value of said 2D+z input data of which the pixel coordinates correspond to these of the projection of said point.

This presents a practical implementation to generate a 3D model at real-time rates whilst maintaining resilience to noisy data.

The present invention relates as well to embodiments of a method for generating an updated 3D model based on an input 3D model and on image data input comprising 2D+z+reliability information, said method comprising a step of projecting said input 3D model to thereby generate at least one 2D+z+reliability model information, said method further comprising the steps of generating said updated 3D model from said 2D+z+reliability information and from said at least one 2D+z+reliability model information in accordance to any of the previously mentioned method steps set out in the previous paragraphs.

In a variant a previously generated version of said updated 3D model is provided in a feedback loop as said input 3D model.

The present invention relates as well embodiments of an arrangement and system for performing embodiments of the present method, to a computer program adapted to perform any of the embodiments of the method and to a computer readable storage medium comprising such a computer program.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein

Fig. 1 shows a high-level schematic block scheme of an embodiment of an arrangement A for performing the method,
Fig. 2 shows a more detailed implementation of the module of arrangement A of fig. 1, which module is adapted to generate a 3D ISO surface,
Figs 3 and 4 depict further detailed implementations of sub-modules of the embodiment of Fig. 2,
Fig. 5a schematically explains an implementation for estimating values of a distance used in embodiments of the device of Fig. 2,
Fig. 5b depicts, for illustrative reasons, a 2D equivalent of such a distance function, for providing a 2D equivalent of an ISO surface,
Figs. 6a-d schematically shows (in a 2D projection equivalent for illustrative reasons) how the octree segmentation and the generation of the ISO surface take place,
Fig. 7 shows (in a 2D projection equivalent) the final result of the generated 3D surface model as a result of the subsequent meshing operation
Fig. 8 shows an embodiment of a system comprising an embodiment of an arrangement A of Fig. 1, and using feedback of an earlier determined model.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

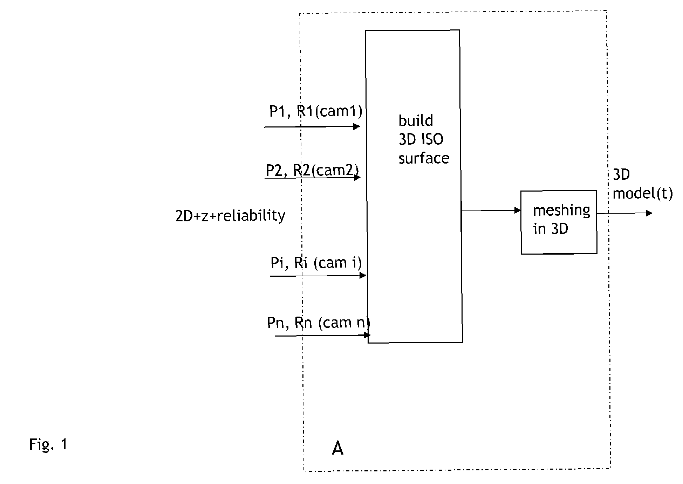

Fig. 1a shows a high level embodiment of an arrangement A for generating a 3D model, out of a number n of 2D+z+reliability and calibration data pertaining to n respective equivalent cameras cam1 to camn used for the determination of these 2D+z data. The 2D + z data together with the associated camera calibration data are denoted P1 to Pn and can e.g. be provided by one or more stereo cameras or other cameras suited for outputting 2D+z data such as time of flight cameras or structured light cameras, depending on the value of n. The associated calibration data such as e.g. pinhole model calibration data, comprise the intrinsic and extrinsic camera calibration parameters. In other embodiments, as will be discussed in a further paragraph, the 2D+z data can also contain projections of an existing standard model, or of an earlier version of the surface model, which is fed back in a feedback loop. Also in this case the projections of the 3D model to 2D are performed in accordance to (pre-selected or automatically determined) camera models. In other embodiments the input 2D+z data may vary as a function of time, e.g. being provided by stereo video cameras . To indicate in Fig. 1 that the data P1 to Pn pertain to a certain camera or camera model, this camera or camera model, resp denoted cam1 to camn, is as well indicated between brackets

Embodiments of the methods are providing a solution to the problem of generating a 3D surface model based on a number n of 2D+z image input data, along with their reliability. This number n can be any number larger or equal than 1. The respective reliability data are denoted R1 to Rn and can be directly provided by the stereo cameras cam1 to camn , which can each comprise a camera pair themselves e.g. as the variance of the data calculated over a reference data set together with an average value of these data. They may also be calculated during the determination of the depth or disparity values themselves, and thus refer to the reliability of the z values.

A 3D ISO surface model is then built, using a combination of the 2D+Z data information along with their associated reliability input metrics . This is performed by the module "build 3D ISO surface", wherein the 3D space is sampled in a non-uniform manner and the information from the different 2D+Z sources as well as their respective reliability is combined. Embodiments will be explained more into detail in the next paragraphs. Once this ISO surface is generated a meshing operation in 3D is performed on this surface, thereby generating a 3D model which is provided at an output of the apparatus A. Such a meshing operation can be based on marching cubes, and will be discussed in a later paragraph of this document. In fig. 1 this next module is denoted "meshing in 3D".

Embodiments of the method therefore allow to combine the local information provided by the n image data inputs P1,R1 to Pn,Rn , as possibly captured by n cameras cam1 to camn, and to propagate the information throughout the model in order to improve consistency. This allows for a good tradeoff between 3D model quality and computational complexity.

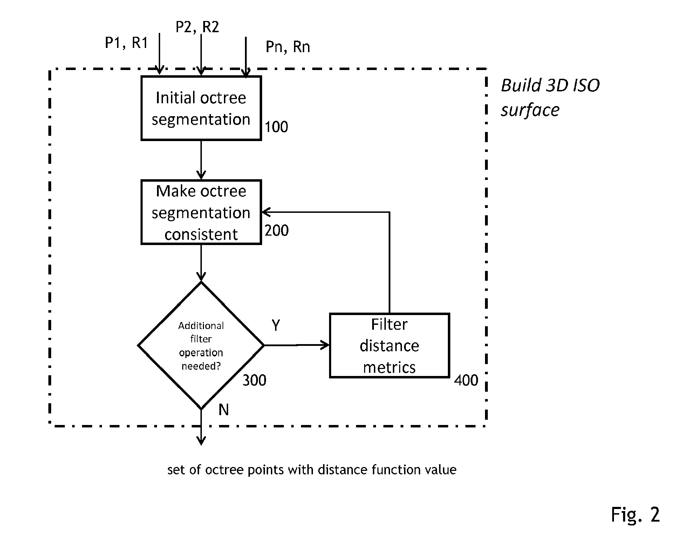

A more detailed embodiment for the generation of the ISO surface will now be described, in conjunction with Fig. 2.

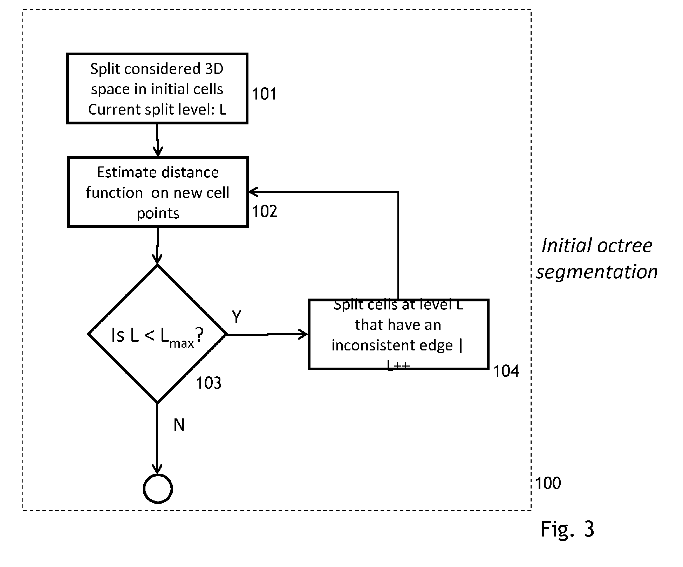

In a first step, performed by sub-module denoted 100 on Fig. 2, the 3D space around and within a 3D model which, at this moment of time, is still unknown, thus yet to be determined, is sampled in a non-uniform manner. This is done by constructing an octree, which is a well-known tree data structure, often used to partition a three dimensional space by recursively subdividing it into eight octants. An octree splits a cube into 8 sub-cubes as long as a split condition is fulfilled, which split condition is defined in our embodiment as a function of distance metrics on the 8 points of the cube. Therefore the calculation of these distance metrics in certain 3D positions, the calculation of the split condition, the check of the split condition to a predetermined criterion, leading to the further split-up of the 3D space, and the calculation of the 3D ISO surface is all performed more or less simultaneously, within sub-module 100. A more detailed implementation thereof is shown on Fig. 3, which indicates that in a first step 101 the considered 3D space is split in an initial octree having 8 sub-cubes.

The construction, and thus associated selection of points of the octree, is performed in the 3D space which is surrounding the (still unknown) model. The size and position of this octree in 3D may be determined by aggregating the 3D space which is viewed by the different cameras cam1 to camn. It is assumed that the 3D surface and thus 3D model will be part of this aggregated 3D space.

In an embodiment the position and initial size of the octree is selected by the user, who may provide this as e.g. 3D coordinates in a 3D space. In another embodiment the position and initial size of the octree are determined automatically as a function of position, direction, viewing angle and depth range of the associated cameras, and by making the union of the thus obtained working area of all n cameras.

Next a distance function function on the corner points of the octree (thus the corner points of all 8 sub-cubes) is to be determined. This is performed in step 102. The distance metric, used in our embodiment for the determination of the value of the distance function in a certain 3D point, is defined as the distance of this point to the (still to be determined) 3D ISO surface of the model, along with a metric indicating the reliability of this value. As the 3D data of the model are not directly available, but only one or more sets of 2D+ z image input data PO to Pn are present, the distance of a corner point of a cube of the octree, to the 3D surface of the model is estimated, by projecting this current 3D corner point to the image planes of the respective (virtual) cameras cam1 to camn. These projection planes themselves are determined from the calibration data of the cameras.

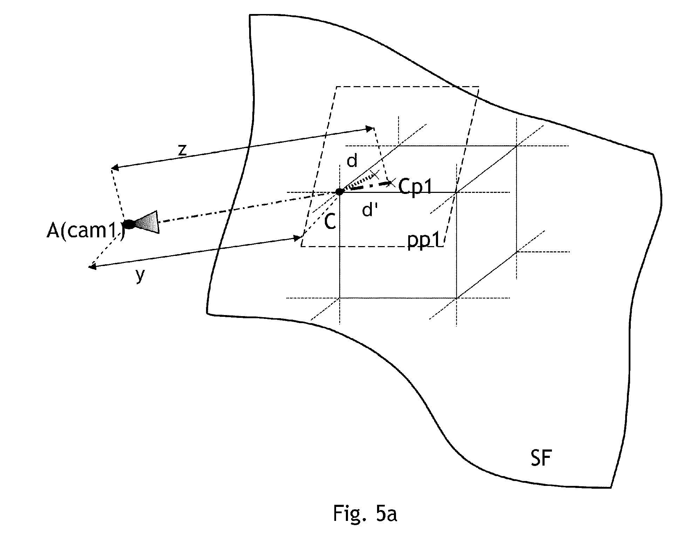

Fig. 5a illustrates this principle for one camera, being camera1. If the projection Cp1 of a 3D edge point C of the octree ( as indicated by the think point at the corner of the cube in fig. 5a) falls within the virtual camera's projection plane, schematically indicated by the parallelogram denoted pp1 on fig. 5a, the (unknown) distance d of this 3D point C to the 3D surface that is being constructed and which is schematically indicated by the free surface SF , will be approximated by the distance between this corner point C of the octree and its projection Cp1 to projection plane pp1 of camera 1. The latter distance is denoted d' Fig. 5a, and is itself expressed by means of the following formula :

$$ d' = z - y \qquad\qquad (1) $$

with y being the distance between the corner point C and the camera center A (cam1) of camera 1

with z being the depth, as found from the projection pixel data $(x_{pp1}, y_{pp1})$ in projection plane pp1 from Cp1, (the projection of this corner point C on the projection plane pp1), after which a search in the input P1 data, as provided by the input data of camera 1, for a corresponding pixel with coordinates $(x_{pp1}, y_{pp1})$, and its associated depth Z in the depth map of this data P1" will yield the value for z.

This distance d' is signed, so one can check whether the point lies outside an object identified by the 3D surface SF, or might lie inside the object identified by this surface. It indeed cannot be known what is behind a surface defined by a single 2D+Z map.

This distance d' is calculated for all n cameras that have the point in sight, thus meaning that the projection of this point C according to their calibration parameters falls within their projection plane .

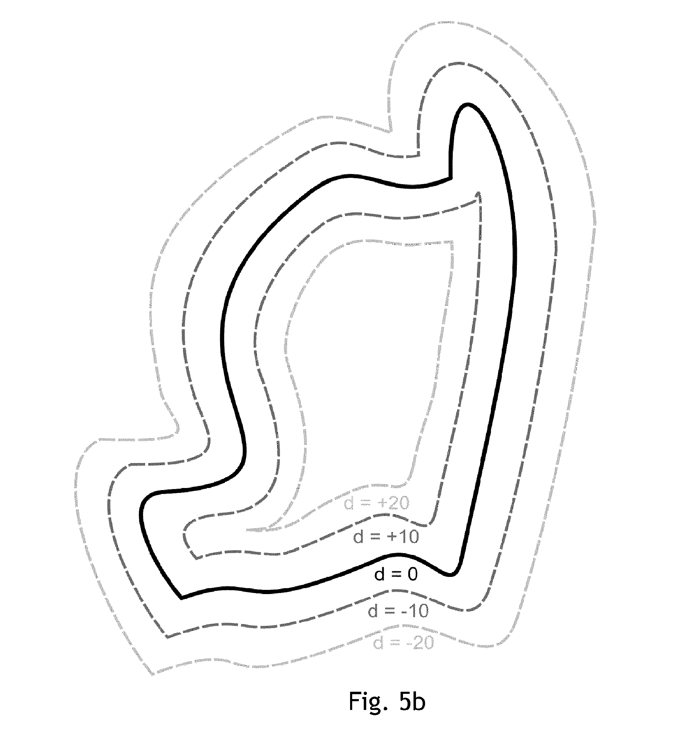

The ISO surface which will be used in embodiments of this invention is then generated by selecting, per octree corner point, one of the n calculated values of the distance d' , based upon a reliability metric, as will be further explained in a next paragraph. For each corner point of the octree, a distance value d' will thus be obtained, which will then be the value of the distance function in this point . The union of all corner points of the octree, for which this distance has a same value will then also define a new surface which is called an iso-surface. We are particularly interested in the iso-surface where the distance metric d' = 0. This is illustrated in Fig. 5b as a projected surface with a full drawn line.

As explained above, the calculations of d' from the n cameras are aggregated. In a first variant the average value of all calculated values of d' will be taken for, determining the final value of the distance function. The resulting reliability can also be obtained as the average of the individual n reliability values.

In another variant, a new distance reliability metric is taken into account. This may again be done in many ways; one such way will now be presented .

For each camera cami, a projection operation of a corner point C of the octree is performed to the camera plane ppi, and if the projection of c lies within ppi, the associated zi and reliability values are obtained from the input data Pi,Ri.

A score function s=f(zi,Ri) is determined as

$$S = f(z_i, R_i) = A * (1-R_i) * z_i \char`^ B \qquad\qquad (2)$$

with Ri being the reliability of the associated zi value, taken from the input data, and usually lying between 0 and 1 with A, B being fixed predetermined parameters, e.g. A=10 and B=1.1

This is calculated for all cameras 1 to n.

The distance d', for use during the determination of the ISO-surface, is then selected as that value, calculated from formula (1), for which s has the minimum value.

The best measurement is thus chosen, and not some average of all measurements.

After this step, the reliability of this measurement is adjusted by "boosting" the reliability when multiple determinations of the value of s, for one octree point, lie in a close vicinity of the best selected one. If, for instance, a first value (for cam1) of the distance d' has a value of 4, with associated reliability of 0.7, and a second value (for cam2) of this distance is 4.2 with associated reliability of 0.6, while the first value has the best score s, the reliability of the selected (first) value can be boosted to a higher value in view of the second value  and its associated reliability. For the above mentioned example, the reliability can e.g. be boosted to 0.8.

Once the distances to the surface, and the associated reliability for a certain point in 3D space, are calculated, it can be further defined how to split up the 3D space by means of the octrees in order to sample it in an adaptive way. This is illustrated in fig. 3 . Initially the considered space is split up in a number of segments; e.g. 4x4x4 - so 64 cubes. The distance and reliability metric is determined for the 8 corner-points of these cubes. Now these cubes are further split when not all 8 corner points have the same sign of the distance metric (meaning they are either all inside- or all outside of an object). This is done recursively until a certain number of splits has been achieved. This number of splits per cell is indicated by the value of L and will be an important factor important for defining the accuracy of the resulting model.

The splitting itself further relies on the presence of an inconsistent edge , as indicated in block 104 of Fig. 3. With inconsistency is meant that the distance value does not have the same sign at all corner points of one octree. Such as cell is further split, and for this call the value of L is increased by one, as is indicated by the symbol L++ in that block.

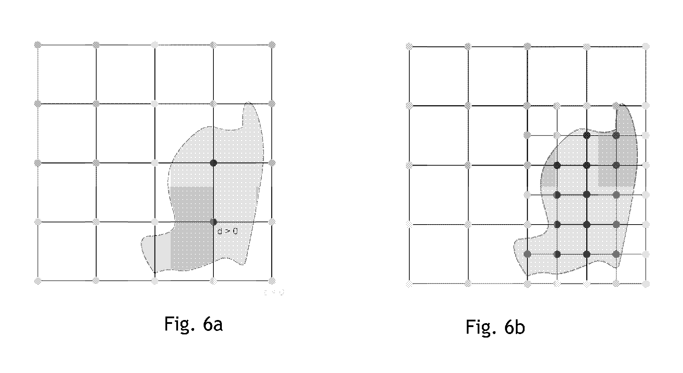

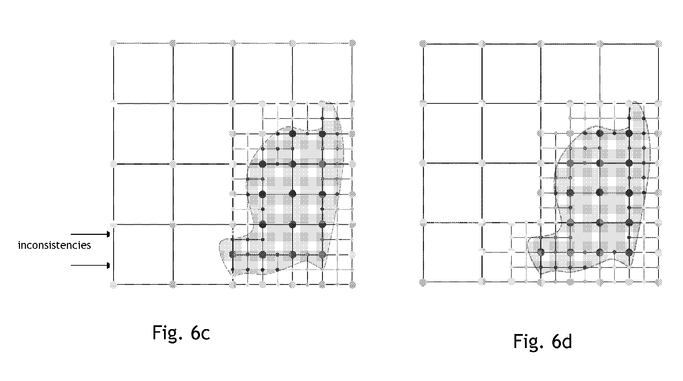

This may be further illustrated on a 2D example, which is used for illlustrative reasons and for simplicity . Figure 6a shows the initial segmentation of the 2D space, and for each of the cells L=1. The equivalent surface model 2D projection to be determined is drawn by the dotted lines and filled with grey shade. There are 6 squares where there is an inconsistency at the edges of those squares; i.e. the sign of the distance function isn't the same, indicating that some corner points are lying outside, and some inside the surface model. These squares will be further split. This is shown in figure 6b. This process is continued until the maximum split target level Lmax is reached. This maximum split value depends on the processing power, the number of cameras involved, the object itself, the level of details required, etc. A typical value used in embodiments of  the arrangent for Lmax is 7. In the simplified 2D equivalent example shown on fig. 6c the maximum split value is 3. In the flowchart of Fig. 3, this maximum split level is also denoted Lmax .

Notice that in fig. 6c there are still 2 edges where there is a sign inconsistency and the neighbouring squares aren't at the same level (these are indicated on figure 6c by means of the arrows). This is an issue, and to solve this an extra operation to make the octree segmentation consistent, as indicated by block 200 in fig. 2, is added.

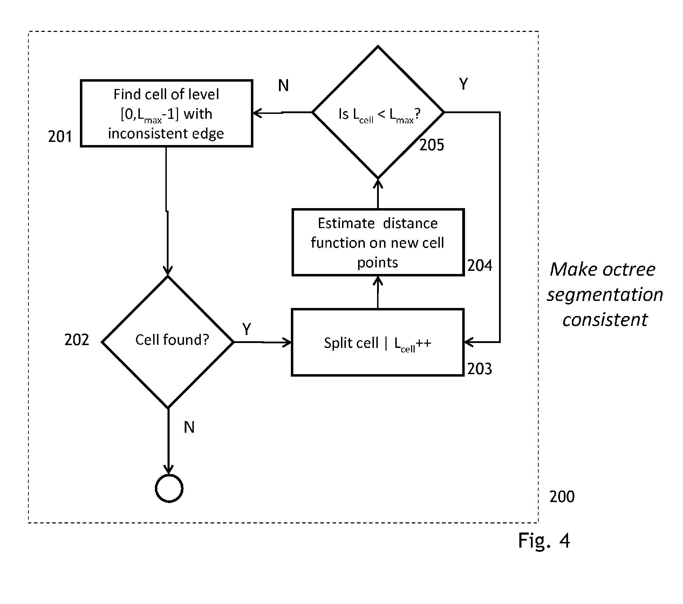

In fig. 6d this is process of realizing consistency is implemented by splitting up the relevant square up to the target level in the direction of the problematic edge. Now no edge inconsistencies exist anymore, and the octree segmentation is finalized. Fig. 4 further illustrates an implementation of this process.

Upon having determined corner points at the edges of the octrees with distance value d' equal to 0, the union of these edge points will then constitute a 3D surface, from which a 3D model can be generated (e.g. by using existing mesh generation methods such as marching-cubes; which will be explained more into detail in a next paragraph). However, in order to further improve the accuracy, and thus to obtain an even more consistent and less noise sensitive result, an additional filtering operation , as indicated by sub-module 400 in Fig. 2, is added wherein the z and reliability information is propagated throughout the octrees. This is done by taking each point of the grid of the octree structure, and looking at its neighbours. A number of methods are again possible for this operation, one implementation of which will be illustrated here.

For a certain point on the grid, the neighbours on each of the 3 octree axes are analyzed. If the reliability Ri of the selected distances are further. lying above a threshold of e.g 0.7, these 3 distance values are interpolated. If the corner point under consideration is denoted A, and its neighboring corner points at a neighboring octree along the x-axis are denoted B and C, and if the reliability of the distances d' at B and C are good (above 0.7), an updated value $d_{Ax}"$ of the distance for corner point A, in the x-direction, can be calculated according to the following formula :

$$d_{Ax}" = (1\text{-}w)\, d'_A + w(1/2\, d'_B + 1/2\, d'_C)$$

with $d'_A$ , $d'_B$, $d'_C$ the earlier selected distance values for respective corner points A,B,C
w being a weight value, e.g. 0,5

Similar operations are performed for the other two directions (the y and z-axes), thereby yielding values for $d_{Ay}"$ and $d_{Az}"$, provided the reliability of these corner points is as well sufficient. If not, no update is performed in that particular direction.

The same is done for the reliabiltiy values

$$r_{Ax}" = (1\text{-}w)\, r'_A + w(1/2\, r'_B + 1/2\, r'_C)$$

The final update for corner point A can then be calculated, based on the values of $d_{Ax}"$ , $d_{Ay}"$ , $d_{Az}"$, e.g. by taking a weighted average, with weights based on the reliability values of the contributing neighbours

$$d_A" = (w_{Ax}\, d_{Ax}" + w_{Ay}\, d_{Ay}" + w_{Az}\, d_{Az}") / (w_{Ax} + w_{Ay} + w_{Az})$$

with $w_{Ax} = (r'_B + r'_C) / 2$
assuming they were earlier calculated for sufficiently reliable measurements being available in these directions.

The reasoning behind this update is that, if the surface that is to be modeled basically is a flat surface and the measurements are correct, the distance to the surface in the middle point on a line is equal to the average  distance of the 2 endpoints of this line. As this is applied in all 3 directions a good correction can be created for certain errors in the input data.

This phase is done in multiple iterations, so the amount of "correction" can be selected according to the noise statistics of the input data. Note that this also smoothens out the resulting 3D model, so the more noisy the data, the less detailed the resulting 3D model.

The test, in module 300 of Fig. 2, for checking whether an additional update is to be performed can be a simple check on an amount of predetermined iterations, which can be a user-input parameter.

. Alternatively, a requirement on the distribution of the reliability values of the corner nodes can be imposed. One such requirement could be that the average reliability should be above a certain value (e.g. 0.7). In this case one keeps on iterating until this requirement is fulfilled, or a certain maximum number of iterations is achieved (in case the requirement cannot be fulfilled).

After the distance metric propagation an additional check is done on the octree consistency; distance metrics can have changed and the octree should reflect these changes.

In the end we want a model which partitions the 3D space depending on the surface complexity that is running through it. If no surface runs through a certain portion of the 3D space, no further refinement should be made. However in highly complex regions of the to-be-generated 3D model, the 3D space should be sufficiently sampled

At this stage, a set of octree points with an associated distance value d' is obtained. The ISO surface then comprises the union of 3D octree corner points with a distance value d' equal to 0. The set of octree points with their associated distance function value is provided to a next module of fig. 1, which is to perform a meshing operation in .

During this phase, a further search is done for neighbouring corner points with values above and below 0. For instance, if at a certain edge of an octree, the distance value of one corner point has a value of 0.5, and the other corner point has a distance value of -1, an interpolated determined point at this edge between these two corner points, at 1/3 of the first corner point, will be selected as an additional point for performing the meshing . In another implementation, also the reliability function s can be brought into account for the determination of this interpolated point. If for instance the distance value of 0.5 of first corner point has a reliability value of 0.5, while distance value -1 of corner point 2 has a reliability value of 0.8, the interpolated point with estimated distance value of 0 may lie in the middle of both corner points.

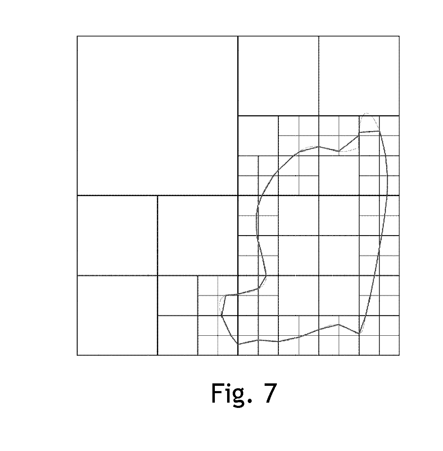

The result of this interpolation process is shown in a 2D equivalent on the aforementioned 2D example (set out in Figs 6a-d) in Fig. 7.

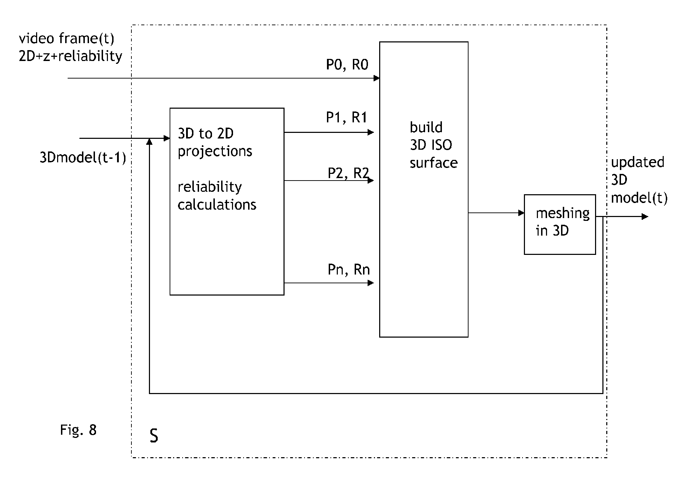

So far a very generic embodiment of the method was described. This can be further used in variant embodiments such as the one of a system S depicted in Fig. 8.

Therein a first input , denoted P0,R0 comprises one or more successive 2D+z image data, P0, belonging to one or more video sequence. In the embodiment of Fig. 8 only one video sequence is depicted. The input P0,R0 also comprises the 3D video camera calibration data (not shown on the figure), together with reliability information R0 of these z-data . These 2D+z data are thus denoted P0 , and comprise pixel data ,such as color, intensity, depth.. obtained from real-life 3D video frames or a real image. They can e.g. be provided by means of a stereo camera. Some 2D+Z cameras are adapted to immediately also provide reliability information with respect to their 2D+z output, this reliability information being denoted R0. In other embodiments the z information has to be calculated e.g. in case the images are taken by two separate 2D cameras, placed close to each other. During these depth or, alternatively, disparity which is the inverse value of the depth, calculations the reliability of the obtained depth or disparity information can be calculated as well . In other implementations the reliability data can be derived from the stereo matching process by means of heuristics that are specific for the stereo matching method. In yet other alternative embodiments a so-called back-check can be performed, implying a control on how well the re-calculated 3D or 2D pixel data match with the calculated ones, and derive therefrom a reliability parameter. The reliability may be expressed by a value lying between 0 and 1, with zero indicating no reliable, and 1 indication very reliable data.

A second input of the system S comprises a 3D model. In the figure this 3D model is the one obtained during the previous time step, indicated by t-1, if the current time step is denoted t. In other embodiments an off the shelf standard model can be taken, meaning that there is no feedback from a previously generated model.

For the embodiment of Fig. 8, the initial model (e.g. at time 0) can as well be such a standard model taken from e.g. a standard library of models. From this 3D model, several sets of 2D+z projection data, denoted P1 to Pn, are obtained by projecting this 3D model to several viewpoints in a 3D space, in fig. 8 n different viewpoints in space are depicted. The projection parameters of the equivalent cameras used for these projections, and pertaining to a camera model such as e.g. the pinhole camera model relate to the intrinsic and extrinsic camera parameters, determined by metrics of the internal camera itself, such as pixel size, aspect ratio, skew and principal point .

The choice of the n viewing points is dependent on the shape of the model; the viewing points should be chosen in order to map the maximal of the object surface with a minimal amount of cameras. This is a maximization process which can be solved with known techniques such as gradient descent, simulated annealing, genetic algorithms, ... For shapes that can be projected onto a sphere while sustaining a bijective relationship between the original points, and their projections, one can place the cameras onto a sphere around the object, and reduce the degrees of freedom in the maximization process. Alternatively, the camera parameters can be user-defined. During these projection operations, the reliability of the obtained 2D + z data can be determined as well, as the projection concerns a re-calculation from 3D vertex coordinate values to 2D projection plane parameters. The reliability may be determined in a heuristic way by tagging the 3D vertices with a reliability that depends on the expected movement of these specific points. When for instance considering the model of a human head, it can be assumed that the region around the mouth and checks will move stronger than the region of the forehead, when these assumptions take into account a normalized scale/position/rotation of the head.

These n projection data and their associated reliability are denoted P1,R1 to Pn,Rn on fig. 1.

In an alternative embodiment the 3D model may already have been updated to the current state of the live data (e.g. face characteristics are transferred to the 3D model) in an initial step (not shown on Fig. 8), after which a number of 2D+Z projections from this updated model are created. The number of projections should be chosen in a way that there is sufficient coverage of the 3D model.

Once these projections and their reliability data are obtained, the building of the 3D ISO surface model and the subsequent generation of the updated 3D model is taking place in accordance to what was explained with reference to Fig. 1 and subsequent figures 2 to 7.

While the principles of the invention have been described above in connection with specific apparatus, it is to be clearly understood that this description is made only by way of example and not as a limitation on the scope of the invention, as defined in the appended claims.

**Claims**

1. Method for generating a 3D model from at least one image data input (P1, R1 (cam1) ; ...; Pn, Rn (camn) ) comprising 2D+z+reliability information, said method comprising the steps of building a 3D surface from said at least one image data input, followed by a meshing operation in 3D on said 3D surface to thereby generate said 3D model.

2. Method according to claim 1 wherein said 3D surface is generated from the calculation of a distance function, applied at corner points of an octree structure, such that corner points at said octree structure with a predetermined value of said distance function, will form said 3D surface.

3. Method according to claim 2 wherein said octree structure is segmented based on the value of said distance function.

4. Method according to claim 2 or 3 wherein said distance function is calculated from the projection of a point of said octree to the projection plane of the equivalent camera providing said at least one image data input, from the distance of said point of said octree to the camera center of said equivalent camera, and from the corresponding z-value of said 2D+z input data of which the pixel coordinates correspond to these of the projection of said point.

5. Method for generating an updated 3D model (3D model (t)) based on an input 3D model (3D model (t-1)) and on image data input (P0,R0) comprising 2D+z+reliability information, said method comprising a step of projecting said input 3D model to thereby generate at least one 2D+z+reliability model information (P1,R1; P2,R2,... ; Pn,Rn), said method further comprising the steps of generating said updated 3D model (updated 3D model (t)) from said 2D+z+reliability information (P0,R0) and from said at least one 2D+z+reliability model information (P1,R1; P2,R2,...; Pn,Rn) according to any of the previous claims 1 to 4.

6. Method according to claim 5 wherein a previously generated version of said updated 3D model (3D model (t-1)) is provided in a feedback loop as said input 3D model.

7. Arrangement (A) for generating a 3D model from at least one image data input ((P1, R1 (cam1) ; ...; Pn, Rn (camn) ) comprising 2D+z+reliability information, said arrangement being adapted to build a 3D surface from said at least one image data input, to perform a meshing operation in 3D on said 3D surface to thereby generate said 3D model.

8. Arrangement (A) according to claim 7 further being adapted to generate said 3D surface from the calculation of a distance function, applied at corner points of an octree structure, such that corner points at said octree structure at which said distance function has a predetermined value, will form said 3D surface.

9. Arrangement (A) according to claim 8, further being adapted to further segment said octree structure based upon the value of said distance function.

10. Arrangement (A) according to claim 8 or 9 further being adapted to calculate said distance function from the projection of a point of said octree to the projection plane of the equivalent camera providing said at least one image data input, from the distance of said point of said octree to the camera center of said equivalent camera, and from the corresponding z-value of said 2D+z input data of which the pixel coordinates correspond to these of the projection of said point.

11. System for generating an updated 3D model from an input 3D model and 2D+z +reliability video information, said system comprising a projection module adapted to generate at least one set of 2D+z and reliability information according to an at least one associated camera, from said 3D model, and to provide said at least one set of 2D+z+reliability information to an arrangement in accordance to any of the previous claims 5 to 7, said arrangement further receiving said 2D+z+reliability video information, and being adapted to generate said updated 3D model from the provided sets of 2D+z+reliability information.

**12.** System according to claim 11 further comprising a feedback connection for providing a previously generated updated model as said input 3D model.

**13.** A computer program adapted to perform, when executed, any of the methods in accordance with any of the claims 1 to 6.

**14.** A computer readable storage medium comprising instructions to cause a data processing apparatus to carry out method steps according to any of the previous claims 1-6

Fig. 1

Fig. 2

Fig. 3

Find cell of level
[0,$L_{max}$-1] with
inconsistent edge

201

Is $L_{cell} < L_{max}$?

N

Y

205

Estimate distance
function on new cell
points

204

202

Cell found?

Y

Split cell | $L_{cell}$++

203

N

*Make octree
segmentation
consistent*

200

Fig. 4

Fig. 5a

d = +20
d = +10
d = 0
d = -10
d = -20

Fig. 5b

Fig. 6a

Fig. 6b

inconsistencies

Fig. 6c

Fig. 6d

Fig. 7

Fig. 8

Europäisches
Patentamt
European
Patent Office
Office européen
des brevets

# EUROPEAN SEARCH REPORT

Application Number

EP 12 30 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANSUNG KIM ET AL: "A Real-Time 3D Modeling System Using Multiple Stereo Cameras for Free-Viewpoint Video Generation", 2006, IMAGE ANALYSIS AND RECOGNITION LECTURE NOTES IN COMPUTER SCIENCE;;LNCS, SPRINGER, BERLIN, DE, PAGE(S) 237 - 249, XP019043784, ISBN: 978-3-540-44894-5 | 1,7,13, 14 | INV. G06T17/00 |
| Y | * abstract * * sections 2 and 4 * ----- | 2-4,8-10 | |
| Y | NEWMAN T S ET AL: "A survey of the marching cubes algorithm", COMPUTERS AND GRAPHICS, ELSEVIER, GB, vol. 30, no. 5, October 2006 (2006-10), pages 854-879, XP027942617, ISSN: 0097-8493 [retrieved on 2006-10-01] * abstract * * section 2.1; section 3.2.1 * ----- | 2-4,8-10 | |
| X | Wolfgang Niem ET AL: "Automatic Modelling of 3D Natural Objects from Multiple Views", European Workshop on Combined Real and Synthetic Image Processing for Broadcast and Video Production, 1994, XP55041668, Retrieved from the Internet: URL:http://reference.kfupm.edu.sa/content/a/u/automatic_modelling_of_3d_natural_object_273467.pdf [retrieved on 2012-10-19] * abstract * * sections 3.2, 4 and 5 * ----- -/-- | 1,7,13, 14 | TECHNICAL FIELDS SEARCHED (IPC)<br>G06T |

The present search report has been drawn up for all claims

| Place of search | Date of completion of the search | Examiner |
|---|---|---|
| Berlin | 29 April 2013 | Gao, Miao |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 12 30 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. Falkenhagen: "3D object-based depth estimation from stereoscopic image sequences", Proc. Int. Workshop Stereoscopic and 3D Imaging, September 1995 (1995-09), pages 81-86, XP55041670, Retrieved from the Internet: URL:http://reference.kfupm.edu.sa/content/d/o/3d_object_based_depth_estimation_from_st_120918.pdf [retrieved on 2012-10-19] * the whole document * | 1,5-7, 11,12 | |
| | | | TECHNICAL FIELDS SEARCHED (IPC) |

The present search report has been drawn up for all claims

| Place of search | Date of completion of the search | Examiner |
|---|---|---|
| Berlin | 29 April 2013 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P04C01)

Europäisches
Patentamt

European
Patent Office

Office européen
des brevets

Application Number

EP 12 30 5492

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

<table>
<tr><td>Europäisches<br>Patentamt<br>European<br>Patent Office<br>Office européen<br>des brevets</td><td>**LACK OF UNITY OF INVENTION**<br>**SHEET B**</td><td>Application Number<br><br>EP 12 30 5492</td></tr>
</table>

The Search Division considers that the present European patent application does not comply with the requirements of unity of invention and relates to several inventions or groups of inventions, namely:

```
    1. claims: 1-4, 7-10, 13, 14

          surface mesh generation
                      ---

    2. claims: 5, 6, 11, 12

          Three-dimensional model update
                      ---
```